# EUROPEAN PATENT APPLICATION

(11) **EP 4 245 789 A1**
(43) Date of publication of application: **20.09.2023**
(21) Application number: 21911174.7
(22) Date of filing: 12.08.2021
(51) Int. Cl.: C08G 63/181, C08G 63/19, C08G 63/199

(54) **POLYESTER-BASED RESIN COMPOSITION**

(30) Priority: 23.12.2020 KR 20200181850
(71) Applicant: Kolon Plastics, Inc., Gyeongsangbuk-do 39537 (KR)
(72) Inventor: JEON, Hwa Jin, Gimcheon-si Gyeongsangbuk-do 39537 (KR); YOON, Sang Won, Gimcheon-si Gyeongsangbuk-do 39537 (KR); PARK, Sung Keun, Gimcheon-si Gyeongsangbuk-do 39537 (KR)
(74) Representative: Ter Meer Steinmeister & Partner
(86) International application number: PCT/KR2021/010701
(87) International publication number: WO 2022/139104

(57) **Abstract**

Provided is a polyester-based resin composition including: (a) at least one type of dicarboxylic acid component selected from an aromatic dicarboxylic acid and an ester-forming derivative of the aromatic dicarboxylic acid; (b) a bisphenyl fluorene-based diol component; and (c) a tetracyclobutane-based diol component, wherein a content of the bisphenyl fluorene-based diol component is 20 to 90 mol% relative to the total of the diol component and a glass transition temperature (Tg) is greater than or equal to 100 °C.

## Description

### [Technical Field]

The present invention relates to a polyester-based resin composition, which is a main component of a molded article that can be used for optical purposes, and relates to a composition suitable for use in optical lenses and the like due to its high heat resistance, high refractive index, and reduced birefringence.

### [Background Art]

Conventionally, plastic lenses have been introduced to overcome problems of glass lenses such as high specific gravity and low impact resistance, and representative examples thereof include copolymers of polyethylene glycol-bis-aryl carbonate and modified diaryl phthalate. However, with the materials, it is possible to produce lenses securing physical properties such as moldability, dyeability, hard coat film adhesion, impact resistance, and the like, but still there is a problem of a relatively low refractive index.

On the other hand, poly(methyl methacrylate) or a polyolefin having an aliphatic ring has high transparency, low birefringence, and low chromatic aberration and thus is suitable as raw materials for optical lenses, but has a low refractive index and also lacks heat resistance. In addition, polycarbonates have excellent transparency and heat resistance but a problem of large birefringence.

In order to solve these problems, copolymerization polyester resins including a bisphenyl fluorene-based compound, a diol component, as a main component has been suggested as an optical material. However, these materials may satisfy one of characteristics such as high heat resistance, a high refractive index, or low birefringence but not all of the characteristics.

A copolymerization polyester resin disclosed in Japanese Patent Registration No. 4908781 has a glass transition temperature (Tg) of 141 °C to 184 °C and a refractive index of 1.655 to 1.663, and thus is suitable for optical lenses but has birefringence of 85×10⁻⁴ to 140×10⁻⁴, which is not sufficient.

Accordingly, development of an optical resin that satisfies all of the heat resistance, refractive index, and birefringence is still required.

### [Prior Art Documents]

### [Patent Document]

(Patent Document 001) Japanese Patent Laid-Open Publication No. 6-184288
(Patent Document 002) Japanese Patent Laid-Open Publication No. 2013-49784
(Patent Document 003) Japanese Patent Laid-Open Publication No. 2015-172147

### [Disclosure]

### [Description of the Drawings]

### [Technical Problem]

An object of the present invention is to provide a polyester resin having high heat resistance, a high refractive index, and reduced birefringence by introducing a copolymerization monomer to improve the problems of a polyester resin mainly composed of a fluorene-based compound, which is an existing optical material.

### [Technical Solution]

In order to achieve the above object, in an embodiment of the present invention, a polyester-based resin composition including the following composition and conditions is provided.

The polyester-based resin composition includes: (a) at least one type of dicarboxylic acid component selected from an aromatic dicarboxylic acid and an ester-forming derivative of the aromatic dicarboxylic acid; (b) a bisphenyl fluorene-based diol component represented by Chemical Formula I; and
(c) a tetracyclobutane-based diol component represented by Chemical Formula II, wherein a content of the bisphenyl fluorene-based diol component is 20 to 90 mol% relative to the total of the diol component and a glass transition temperature (Tg) is greater than or equal to 100 °C: 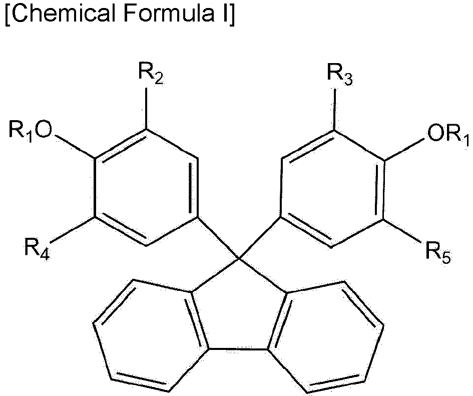
(in Chemical Formula I, R₁ is a hydrogen atom or a hydroxyalkyl group having 1 to 4 carbon atoms, and R₂, R₃, R₄, and R₅ are each independently a hydrogen atom, an alkyl group having 1 to 4 carbon atoms, or an aryl group having 1 to 4 carbon atoms, or an aralkyl having 1 to 4 carbon atoms, and R₂ to R₅ are each the same or different), and 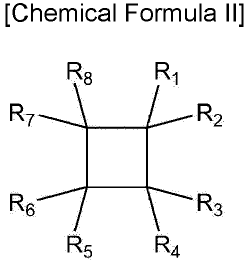
(in Chemical Formula II, at least two of R₁ to R₈ are each independently a hydroxy group or a hydroxyalkyl group having 1 to 4 carbon atoms, and the others are hydrogen atoms or an alkyl group having 1 to 4 carbon atoms, and the alkyl group having 1 to 4 carbon atoms are each the same or different).

In the above embodiment, the aromatic dicarboxylic acid may include at least one selected from terephthalic acid, isophthalic acid, 2,6-naphthalene dicarboxylic acid, biphenyl-4,4'-dicarboxylic acid, and 4,4'-diphenyl ether dicarboxylic acid dimethyl ester, and the ester-forming derivative of the aromatic dicarboxylic acid may include at least one selected from dimethyl terephthalate, dimethyl isophthalate, dimethyl 2,6-naphthalene dicarboxylate, dimethyl biphenyl-4,4'-dicarboxylate, and 4,4'-diphenyl ether dicarboxylic acid dimethyl ester.

In the above embodiment, the tetracyclobutane-based diol component represented by Chemical Formula II may be 2,2,4,4,-tetramethyl-1,3-cyclobutanediol, and the bisphenyl fluorene-based diol component represented by Chemical Formula I may be 9,9-bis[4-(2-hydroxyethoxy)phenyl]fluorene.

In the above embodiment, a content of the tetracyclobutane-based diol component represented by Chemical Formula II may be 10 to 50 mol% based on the total diol component included in the polyester resin. In addition, the tetracyclobutane-based diol component represented by Chemical Formula 2 may include cis-tetra-cyclobutane-based diol and trans-tetra-cyclobutane diol.

In the above embodiment, the polyester resin composition may further include (d) at least one selected from an aliphatic diol component having 2 to 6 carbon atoms or an alicyclic diol component having 6 to 14 carbon atoms in addition to the aforementioned composition. Herein, the aliphatic diol component having 2 to 6 carbon atoms may include at least one selected from ethylene glycol, 1,2-propanediol, 1,3-propanediol, 1,4-butanediol, 1,2-butanediol, 1,3-butanediol, 1,4-pentanediol, 1,5-pentanediol, 1,3-pentanediol, and neopentyl glycol. In addition, the alicyclic diol component having 6 to 14 carbon atoms may include at least one selected from 1,2-cyclohexanediol, 1,3-cyclohexanediol, 1,4-cyclohexanediol, 1,2-cyclohexanedimethanol, 1,3-cyclohexanedimethanol, 1,4-cyclohexanediethanol, 1,2-cyclohexanediethanol, 1,3-cyclohexanediethanol, and 1,4-cyclohexanediethanol.

### [Advantageous Effects]

A polyester-based resin composition according to the present invention may have high heat resistance and a high refractive index by introducing a new monomer, compared with the prior arts. Accordingly, a material more suitable for applications such as optical lenses and the like may be provided.

### [Mode for Invention]

Prior to describing the present invention in detail below, the terms used herein are only for describing specific embodiments, and are not intended to limit the scope of the present invention, which is limited only by the appended claims. All technical and scientific terms used herein have the same meaning as commonly understood by a person of ordinary skill in the art unless otherwise specified.

Throughout this specification and claims, the terms "comprise," "comprises," and "comprising," unless stated otherwise, are meant to include a stated object, step or group of objects, and steps, and any other object, but It is not used in the sense of excluding any other object, step or group of objects or groups of steps.

On the other hand, various embodiments and embodiments of the present invention can be combined with any other embodiments unless clearly indicated to the contrary. Any feature indicated as being particularly desirable or advantageous may be combined with any other features and characteristics indicated as being particularly desirable or advantageous.

Hereinafter, the present invention will be described in detail.

According to an embodiment of the present invention, a polyester-based resin composition includes: (a) at least one type of dicarboxylic acid component selected from an aromatic dicarboxylic acid and an ester-forming derivative of the aromatic dicarboxylic acid; (b) a bisphenyl fluorene-based diol component represented by Chemical Formula I; and (c) a tetracyclobutane-based diol component represented by Chemical Formula II, wherein a content of the bisphenyl fluorene-based diol component is 20 mol% to 90 mol% relative to the total of the diol component, and a glass transition temperature (Tg) is greater than or equal to 100 °C: 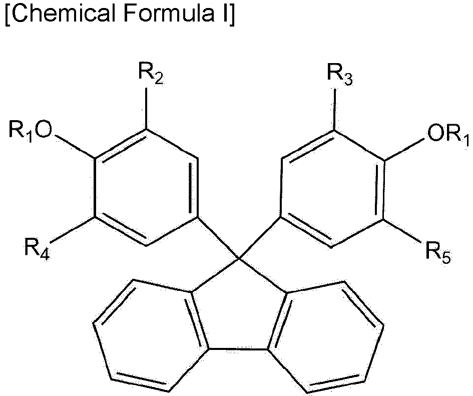 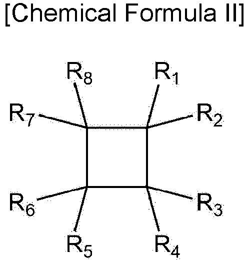 (in Chemical Formula I, R₁ is a hydrogen atom or a hydroxyalkyl group having 1 to 4 carbon atoms, and R₂, R₃, R₄, and R₅ are each independently a hydrogen atom, an alkyl group having 1 to 4 carbon atoms, or an aryl group having 1 to 4 carbon atoms, or an aralkyl group having 1 to 4 carbon atoms, and R₂ to R₅ are each the same or different, and in Chemical Formula II, at least two of R₁ to R₈ are each independently a hydroxy group or a hydroxyalkyl group having 1 to 4 carbon atoms, and the others are hydrogen atoms or an alkyl group having 1 to 4 carbon atoms, and the alkyl group having 1 to 4 carbon atoms are each the same or different).

The polyester-based resin composition according to an embodiment of the present invention may be prepared by copolymerizing: (a) at least one dicarboxylic acid component selected from an aromatic dicarboxylic acid and an ester-forming derivative compound thereof; (b) a bisphenyl fluorene-based diol component represented by Chemical Formula I; and (c) a tetracyclobutane-based diol component represented by Chemical Formula 2: 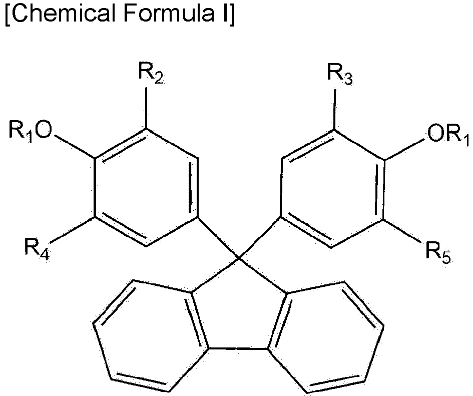 (in Chemical Formula I, R₁ is a hydrogen atom or a hydroxyalkyl group having 1 to 4 carbon atoms, and R₂, R₃, R₄, and R₅ are each independently a hydrogen atom, an alkyl group having 1 to 4 carbon atoms, or an aryl group having 1 to 4 carbon atoms, or an aralkyl group having 1 to 4 carbon atoms, and R₂ to R₅ are each the same or different), and 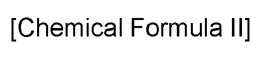 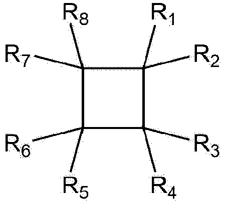 (in Chemical Formula II, at least two of R₁ to R₈ are each independently a hydroxy group or a hydroxyalkyl group having 1 to 4 carbon atoms, and the others are hydrogen atoms or an alkyl group having 1 to 4 carbon atoms, and the alkyl group having 1 to 4 carbon atoms are each the same or different).

The dicarboxylic acid component is a basic raw material for a polyester resin, and any material capable of producing a polyester resin may be used without limitation. The dicarboxylic acid component may be an aromatic dicarboxylic acid and an ester-forming derivative compound of the aromatic dicarboxylic acid.

The aromatic dicarboxylic acid may include terephthalic acid, isophthalic acid, 2,6-naphthalene dicarboxylic acid, biphenyl-4,4'-dicarboxylic acid, and 4,4'-diphenylether dicarboxylic acid. The ester-forming derivative of the aromatic dicarboxylic acid may include dimethyl terephthalate, dimethyl isophthalate, dimethyl 2,6-naphthalene dicarboxylate, dimethyl biphenyl-4,4'-dicarboxylate, 4,4'-diphenyl ether dicarboxylic acid dimethyl ester, and the like, but are not limited thereto.

In the polymerization of the polyester-based resin composition according to an embodiment of the present invention, an aromatic dicarboxylic acid or a derivative for forming esters thereof alone may be used, but at least two selected from the aromatic dicarboxylic acid or the derivative of esters thereof may be used together. For example, dimethylterephthalate and dimethylisophthalate may be used together, wherein the dimethylterephthalate and the dimethylisophthalate are used in a mole ratio of 20:80 to 80:20.

As shown in the above examples, when the dimethylterephthalate and the dimethylisophthalate are used together as dicarboxylic acid components in the polyester-based resin composition, the dicarboxylic acid components have a similar structure and thus may be easily prepared into the resin composition, and in addition, have different influences on birefringence and heat resistance, which may be advantageous in controlling physical properties. In terms of controlling these physical properties, a content ratio of the dimethylterephthalate and the dimethylisophthalate may be adjusted, and when the dimethylphthalate is included in a higher content and thus used in a mole ratio of greater than 80 in the examples, there may be a low effect of reducing birefringence. On the contrary, when the dimethylisophthalate is included in a higher content and thus used in a mole ratio of greater than 80, there may be an excellent effect of reducing birefringence but is disadvantageous in terms of securing heat resistance.

In the polyester-based resin composition according to an embodiment of the present invention, the bisphenyl fluorene-based diol component represented by Chemical Formula I may include 9,9-bis[4-2-hydroxyethoxy)phenyl]fluorene, 9,9-bis[4-(2-hydroxyethoxy)-3-methylphenyl]fluorene, 9,9-bis[4-(2-hydroxyethoxy)-3,5-dimethylphenyl]fluorene, or 9,9-bis[4-(2-hydroxyethoxy)-3,5-diethyl phenyl]fluorene, but is not limited thereto.

A content of the bisphenyl fluorene-based diol component represented by Chemical Formula I is desirably 20 to 90 mol% of the total diol components included in the polyester-based resin. When the content of the bisphenyl fluorene-based diol component represented by Chemical Formula I is less than 20 mol%, heat resistance or refractive index may decrease, and when it exceeds 90 mol%, fluidity and mechanical properties of the resin may decrease.

In an embodiment of the present invention, the tetracyclobutane-based diol component represented by Chemical Formula II is a component that helps to improve heat resistance, and may include 2,2,4,4-tetramethylcyclobutane-1,3-diol (TMCD), 2,2,4,4-tetraethyl-1,3-cyclobutane diol (TECD), or 3,3,4,4-tetramethyl-1,2-cyclobutane diol, but is not limited thereto.

A content of the tetracyclobutane-based diol component represented by Chemical Formula II may be 10 mol% to 80 mol% of total diol components included in the polyester-based resin. When the content is less than 10 mol%, there may be an insignificant effect of improving heat resistance, and when the content is greater than 80 mol%, fluidity of the resin may be deteriorated, deteriorating moldability and thus deteriorating mechanical properties.

The tetracyclobutane-based diol component represented by Chemical Formula II may simultaneously include cis and trans isomers, wherein a mole ratio of cis-tetra-cyclobutane-based diol and trans-tetra-cyclobutane diol may be 1:99 to 99:1. In order to achieve the purpose of the present invention, a mole ratio of the cis and trans isomers of the tetracyclobutane-based diol component is not necessary particularly limited, but the cis-tetra-cyclobutane-based diol and the trans-tetra cyclobutane-based diol may have a mole ratio of 90:10 to 10:90 and further, 80:20 to 20:80.

Experimentally, when the tetra cyclobutane-based diol includes the cis and trans isomers at the same time, as the cis isomer is more included, there is a more excellent effect of improving heat resistance. Although not theoretically established, the reason why heat resistance increases as the cis isomer is more included is that the cis isomer is advantageous in twisting a molecular chain in a three-dimensional structure in a molecule and thus increases the twisted structure in the molecule.

The polyester-based resin according to an embodiment of the present invention may further include an aliphatic diol component having 2 to 6 carbon atoms. The aliphatic diol component having 2 to 6 carbon atoms may include ethylene glycol, 1,2-propanediol, 1,3-propanediol, 1,4-butanediol, 1,2-butanediol, 1,3-butanediol, 1,4-pentanediol, 1,5-pentanediol, 1,3-pentanediol, neopentylglycol, and the like, but is not limited thereto.

The polyester-based resin according to an embodiment of the present invention may further include an alicyclic diol component having 6 to 14 carbon atoms. The alicyclic diol component having 6 to 14 carbon atoms may include 1,2-cyclohexanediol, 1,3-cyclohexanediol, 1,4-cyclohexanediol, 1,2-cyclohexanedimethanol, 1,3-cyclohexanedimethanol, 1,4-cyclohexanedimethanol, 1,2-cyclohexanediethanol, 1,3-cyclohexanediethanol, 1,4-cyclohexanediethanol, and the like but is not limited thereto.

In an embodiment of the present invention, the aliphatic diol component and the alicyclic diol component may be simultaneously included in the polyester-based resin, wherein the aliphatic diol component may be, for example, ethylene glycol and 1,4-cyclohexanedimethanol.

When the 1 ,4-cyclohexanedimethanol component is included, as a steric hinderance increases in the entire molecular structure, heat resistance and impact resistance of the polyester-based resin may be further improved.

Furthermore, the 1,4-cyclohexanedimethanol may simultaneously include cis and trans isomers. Herein, the 1,4-cyclohexanedimethanol may include 70 mol% of the trans isomer. The higher the trans isomer content of the 1,4-cyclohexanedimethanol, the better the effect of increasing heat resistance, but the higher the cis isomer content, the better the effect of increasing tensile elongation of molded articles.

In an embodiment of the present invention, all diol components including the bisphenyl fluorene-based diol component, the tetracyclobutane-based diol component, or the aliphatic diol component having 2 to 6 carbon atoms may be included at 100 parts by mole, based on 100 parts by mole of one or more components selected from the aromatic dicarboxylic acid and a derivative component forming esters thereof.

By copolymerizing the aforementioned composition, the polyester-based resin of the present invention may have a glass transition temperature (Tg) of greater than or equal to 100 °C, a refractive index of greater than or equal to 1.6, and double birefringence of less than or equal to 5.0×10⁻⁴.

### DETAILED DESCRIPTION OF THE EMBODIMENTS

### [Examples]

Hereinafter, the present invention will be described in more detail through examples, but these examples are intended to explain the present invention in more detail, and the present invention is not limited by the following examples.

### (Examples 1 to 6 and Comparative Examples 1 to 5)

Copolymerization polyester resins were prepared by adding a dicarboxylic acid component and a diol component to a polymerization reactor for preparing a polyester, equipped with a stirrer. Types and contents of the dicarboxylic acid and diol components are shown in Table 1.

A polymerization reaction proceeded through a two-step method. A first step polymerization was performed by putting the raw materials and a catalyst in the reactor and increasing a temperature of a reaction tube to 190 °C for 1 hour under normal pressure. Subsequently, the temperature of the reaction tube was increased to 220 °C for 2 hours and additionally to 240 °C for 1 hour to discharge methanol in the tube.

A second step polymerization was performed by slowly increasing the pipe temperature to 280 °C under vacuum for 1 hour and then carrying out a condensation polymerization reaction at 280 °C for about 4 hours. When the reaction was completed, after stopping the stirring and adding nitrogen thereto to release the vacuum, a copolymerization polyester resin was granulated, while applying a pressure.

**(Table 1)**

| | Content unit: mol% | | | | | | |
|---|---|---|---|---|---|---|---|
| | DMT | DMI | FBPE | TMCD | Cis form content in TMCD (mol%) | EG | CHDM |
| Example 1 | 0.5 | 0.5 | 0.2 | 1 | 50 | 0.6 | 0 |
| Example 2 | 0.5 | 0.5 | 0.9 | 0.9 | 50 | 0 | 0 |
| Example 3 | 0.8 | 0.2 | 0.2 | 1 | 50 | 0.6 | 0 |
| Example 4 | 1 | 0 | 0.2 | 0.5 | 50 | 1.1 | 0 |
| Example 5 | 1 | 0 | 0.2 | 0.5 | 70 | 1.1 | 0 |
| Example 6 | 1 | 0 | 0.2 | 0.5 | 50 | 0.7 | 0.4 |
| Comparative Example 1 | 0.5 | 0.5 | 1 | 0 | 0 | 0.8 | 0 |
| Comparative Example 2 | 0.5 | 0.5 | 0.2 | 0 | 0 | 1.6 | 0 |
| Comparative Example 3 | 1 | 0 | 0.1 | 0 | 0 | 1.7 | 0 |
| Comparative Example 4 | 0.5 | 0.5 | 0.2 | 0.09 | 50 | 1.51 | 0 |
| Comparative Example 5 | 0.5 | 0.5 | 0.1 | 1.7 | 50 | 0 | 0 |
| * DMT: dimethyl terephthalate, CAS No. 120-61-6 | | | | | | | |
| * DMI: dimethyl isophthalate, CAS No. 1459-93-4 | | | | | | | |
| * FBPE: 9,9-bis[4-(2-hydroxyethoxy)phenyl]fluorene, CAS No. 117344-32-8 | | | | | | | |
| * TMCD: 2,2,4,4-tetramethylcyclobutane-1,3-diol, obtained from Toko Chemical Industry Co., Ltd., CAS No. 3010-96-6 | | | | | | | |
| * EG: ethylene glycol, obtained from Samchun Chemical Co., Ltd. | | | | | | | |
| * CHDM: 1,4-cyclohexanedimethanol, CAS No. 105-08-8 | | | | | | | |

The compositions of the polyester resins obtained in Examples 1 to 6 and Comparative Examples 1 to 5 are shown in Table 2.

**(Table 2)**

| | Content unit: mol% | | | | | | |
|---|---|---|---|---|---|---|---|
| | DMT | DMI | FBPE | TMCD | Cis form content in TMCD (mol%) | EG | CHDM |
| Example 1 | 50 | 50 | 20 | 50 | 50 | 30 | 0 |
| Example 2 | 50 | 50 | 90 | 10 | 50 | 0 | 0 |
| Example 3 | 80 | 20 | 20 | 50 | 50 | 30 | 0 |
| Example 4 | 100 | 0 | 20 | 25 | 50 | 55 | 0 |
| Example 5 | 100 | 0 | 20 | 25 | 70 | 55 | 0 |
| Example 6 | 100 | 0 | 20 | 25 | 50 | 35 | 20 |
| Comparative Example 1 | 50 | 50 | 100 | 0 | 0 | 0 | 0 |
| Comparative Example 2 | 50 | 50 | 20 | 0 | 0 | 80 | 0 |
| Comparative Example 3 | 100 | 0 | 10 | 0 | 0 | 90 | 0 |
| Comparative Example 4 | 50 | 50 | 20 | 5 | 50 | 76 | 0 |
| Comparative Example 5 | 50 | 50 | 10 | 90 | 50 | 0 | 0 |
| * DMT: dimethyl terephthalate, CAS No. 120-61-6 | | | | | | | |
| * DMI: dimethyl isophthalate, CAS No. 1459-93-4 | | | | | | | |
| * FBPE: 9,9-bis[4-(2-hydroxyethoxy)phenyl]fluorene, CAS No. 117344-32-8 | | | | | | | |
| * TMCD: 2,2,4,4-tetramethylcyclobutane-1,3-diol, obtained from Toko Chemical Industry Co., Ltd., CAS No. 3010-96-6 | | | | | | | |
| * EG: ethylene glycol, obtained from Samchun Chemical Co., Ltd. | | | | | | | |
| * CHDM: 1,4-cyclohexanedimethanol, CAS No. 105-08-8 | | | | | | | |

The polyester-based resin compositions according to Examples 1 to 6 and Comparative Examples 1 to 5 were measured with respect to properties for intrinsic viscosity, a glass transition temperature (Tg), a refractive index, and double birefringence. The measured properties are shown in Table 3, wherein each property was measured in the following methods.

### [Measurement of Intrinsic Viscosity]

2 g of a sample was added to 25 ml of ortho-chlorophenol and dissolved therein at 200 rpm for 1 hour at 100 °C. 7.5 ml of the obtained sample solution was taken by using a hall pipette and then put into a Canon viscometer and incubated for 20 minutes in a 25 °C thermostat. The solution in the viscometer was sucked up by using a vacuum and then measured with respect to the intrinsic viscosity by operating a stopwatch as soon as a meniscus passed through an upper scale of the viscometer and counting the number of seconds taken until the meniscus passed a lower scale.

### [Measurement of Glass Transition Temperature]

Glass transition temperatures of the test specimens were measured in accordance with ASTM D3418 standards by using a differential scanning calorimeter (DSC 1) manufactured by Mettler-Toledo, LLC.

### [Measurement of Refractive Index]

An about 150 um-thick transparent film was formed by using 1 g of each resin and then heat-pressed at 200 °C and measured with respect to a refractive index by using an Abbe refractometer (ATAGO DR-M4) at 20 °C. Each refractive index of the examples and the comparative examples was measured at a wavelength of 589 nm.

### [Measurement of Double Birefringence]

An about 100 to 400 um-thick film was formed by heat-pressing 1 g of each resin at 200 °C and cut into a size of 15 mm × 40 mm. Subsequently, the cut film was double stretched at 20 %/s at a temperature of Tg + 10 °C and rapidly cooled, obtaining a stretched film. The stretched film was measured with respect to double birefringence by using KOBRA-WPR manufactured by Oji Scientific Instruments.

**(Table 3)**

| | Intrinsic viscosity | Glass transition temperature | Refractive index | Double birefringence |
|---|---|---|---|---|
| Example 1 | 0.421 | 117 | 1.613 | 3.2x10⁻⁴ |
| Example 2 | 0.41 | 157 | 1.645 | 1.7x10⁻⁴ |
| Example 3 | 0.413 | 125 | 1.612 | 2.9x10⁻⁴ |
| Example 4 | 0.414 | 117 | 1.613 | 3.5x10⁻⁴ |
| Example 5 | 0.421 | 121 | 1.614 | 3.4x10⁻⁴ |
| Example 6 | 0.419 | 123 | 1.617 | 3.2x10⁻⁴ |
| Comparative Example 1 | 0.21 | 149 | not measurable | not measurable |
| Comparative Example 2 | 0.412 | 106 | 1.604 | 7x10⁻⁴ |
| Comparative Example 3 | 0.43 | 92 | 1.592 | 6x10⁻⁴ |
| Comparative Example 4 | 0.43 | 97 | 1.596 | 3x10⁻⁴ |
| Comparative Example 5 | 0.414 | 132 | 1.587 | 3.5x10⁻⁴ |

Closely looking into the measured properties, the polyester resin compositions of Examples 1 to 6 exhibited a glass transition temperature of 100 °C or higher and thus had excellent heat resistance, a refractive index of 1.6 or higher, and low double birefringence of 5.0×10⁻⁴ or less. On the contrary, in Comparative Example 1 including a bisphenyl fluorene-based diol component out of the appropriate amount, the refractive index was immeasurable, and Comparative Example 2 including no tetracyclobutane-based diol component exhibited high double birefringence and thus turned out to not be suitable for optical use. In addition, Comparative Example 3 including an aliphatic diol component alone in the diol component exhibited a lower glass transition temperature than 100 °C and thus lacked heat resistance and exhibited unsuitable double birefringence. Comparative Example 4 having no bisphenyl fluorene-based diol component satisfied the double birefringence but lacked the heat resistance.

On the other hand, Comparative Example 5 including a bisphenyl fluorene-based diol component and a tetracyclobutane-based diol component out of the appropriate ranges exhibited a low refractive index and thus turned out to be unsuitable for optical use.

### [Industrial Applicability]

A polyester-based resin composition according to the present invention had high heat resistance and a high refractive index but reduced the birefringence and may be used to provide a molded article suitable for optical lenses and the like.

## Claims

1. A polyester-based resin composition, comprising:
(a) at least one type of dicarboxylic acid component selected from an aromatic dicarboxylic acid and an ester-forming derivative of the aromatic dicarboxylic acid;
(b) a bisphenyl fluorene-based diol component represented by Chemical Formula I; and
(c) a tetracyclobutane-based diol component represented by Chemical Formula II,
wherein a content of the bisphenyl fluorene-based diol component is 20 to 90 mol% relative to the total of the diol component, and
a glass transition temperature (Tg) is greater than or equal to 100 °C: 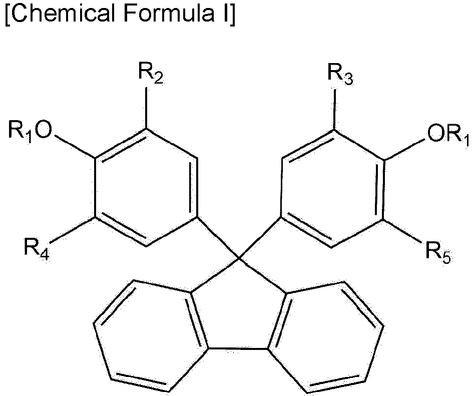
(in Chemical Formula I, R₁ is a hydrogen atom or a hydroxyalkyl group having 1 to 4 carbon atoms, and R₂, R₃, R₄, and R₅ are each independently a hydrogen atom, an alkyl group having 1 to 4 carbon atoms, or an aryl group having 1 to 4 carbon atoms, or an aralkyl having 1 to 4 carbon atoms, and R₂ to R₅ are each the same or different), and 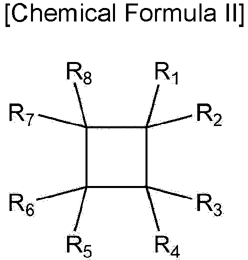
(in Chemical Formula II, at least two of R₁ to R₈ are each independently a hydroxy group or a hydroxyalkyl group having 1 to 4 carbon atoms, and the others are hydrogen atoms or an alkyl group having 1 to 4 carbon atoms, and the alkyl group having 1 to 4 carbon atoms are each the same or different).

2. The polyester-based resin composition of claim 1, wherein
the aromatic dicarboxylic acid includes at least one selected from terephthalic acid, isophthalic acid, 2,6-naphthalene dicarboxylic acid, biphenyl-4,4'-dicarboxylic acid, and 4,4'-diphenyl ether dicarboxylic acid dimethylester.

3. The polyester-based resin composition of claim 1, wherein
the aromatic dicarboxylic acid includes at least one selected from terephthalic acid, isophthalic acid, 2,6-naphthalene dicarboxylic acid, biphenyl-4,4'-dicarboxylic acid, and 4,4'-diphenyl ether dicarboxylic acid dimethylester, and
the ester-forming derivative of the aromatic dicarboxylic acid includes at least one selected from dimethyl terephthalate, dimethyl isophthalate, dimethyl 2,6-naphthalene dicarboxylate, dimethyl biphenyl-4,4'-dicarboxylate, and 4,4'-diphenyl ether dicarboxylic acid dimethyl ester.

4. The polyester-based resin composition of claim 1, wherein
the tetracyclobutane-based diol component represented by Chemical Formula II is 2,2,4,4,-tetramethyl-1 ,3-cyclobutanediol.

5. The polyester-based resin composition of claim 1, wherein
the bisphenyl fluorene-based diol component represented by Chemical Formula I is 9,9-bis[4-(2-hydroxy ethoxy)phenyl]fluorene.

6. The polyester-based resin composition of claim 1, wherein
a content of the tetracyclobutane-based diol component represented by Chemical Formula II is 10 mol% to 50 mol% based on the total diol component included in the polyester resin.

7. The polyester-based resin composition of claim 1, wherein
the tetracyclobutane-based diol component represented by Chemical Formula II is a cis-tetra-cyclobutane-based diol and a trans-tetra-cyclobutane diol.

8. The polyester-based resin composition of claim 1, wherein
the polyester-based resin composition further includes (d) at least one selected from an aliphatic diol component having 2 to 6 carbon atoms or an alicyclic diol component having 6 to 14 carbon atoms.

9. The polyester-based resin composition of claim 8, wherein
the aliphatic diol component having 2 to 6 carbon atoms includes at least one selected from ethylene glycol, 1,2-propanediol, 1,3-propanediol, 1,4-butanediol, 1,2-butanediol, 1,3-butanediol, 1,4-pentanediol, 1,5-pentanediol, 1 ,3-pentanediol, and neopentylglycol.

10. The polyester-based resin composition of claim 8, wherein
the alicyclic diol component having 6 to 14 carbon atoms includes at least one selected from 1,2-cyclohexanediol, 1,3-cyclohexanediol, 1,4-cyclohexanediol, 1,2-cyclohexanedimethanol, 1,3-cyclohexanedimethanol, 1,4-cyclohexanedimethanol, 1,2-cyclohexanediethanol, 1,3-cyclohexanediethanol, and 1,4-cyclohexanediethanol.
